# EUROPÄISCHE PATENTSCHRIFT

(11) **EP 4 267 880 B1**
(45) Veröffentlichungstag und Bekanntmachung des Hinweises auf die Patenterteilung: **22.07.2026**
(21) Anmeldenummer: 21835990.9
(22) Anmeldetag: 03.12.2021
(51) Int. Cl.: F17C 1/06

(54) **BOSS FÜR EINEN DRUCKTANK UND DRUCKTANK FÜR GASBETRIEBENES FAHRZEUG**
CAP FOR A PRESSURE TANK, AND PRESSURE TANK FOR A GAS-POWERED VEHICLE
BOUCHON POUR RÉSERVOIR SOUS PRESSION ET RÉSERVOIR SOUS PRESSION POUR VÉHICULE À GAZ

(30) Priorität: 22.12.2020 DE 102020134624
(43) Veröffentlichungstag der Anmeldung: 01.11.2023
(60) Teilanmeldung: 24194452.9
(73) Patentinhaber: Voith HySTech GmbH, 85748 Garching (DE)
(72) Erfinder: FRENZ, Hartmut, 73072 Donzdorf (DE); WESSELS, Lukas, 85653 Aying (DE); BLEISCHWITZ, Mark, 80636 München (DE); LANZL, Thomas, 93192 Wald (DE)
(74) Vertreter: Voith Patent GmbH - Patentabteilung
(86) Internationale Anmeldenummer: PCT/EP2021/084093
(87) Internationale Veröffentlichungsnummer: WO 2022/135872

(56) Entgegenhaltungen:
- WO-A1-2018/217529
- US-A- 5 798 156
- US-A1- 2016 025 266

## Beschreibung

Die Erfindung betrifft einen Drucktank für die Speicherung von Gas zur Montage in einem gasbetriebenen Fahrzeug, wobei der Drucktank eine rotationssymmetrische, langgestreckte Form hat, die im Mittelbereich zylinderförmig und an beiden Enden mit gewölbten Polkappen abgeschlossen ist. Der Drucktank weist eine Wandung, die einen Hohlraum zur Speicherung des Gases umschließt, sowie ein metallisches Anschlussstück, einen sogenannten Boss, an jeder der Polkappen auf, wobei die Wandung eine Verstärkungsschicht aus faserverstärktem Kunststoff und einen innenliegenden Liner zur Abdichtung umfasst.

Weiterhin bezieht sich die Erfindung auf einen Boss für einen solchen Drucktank.

Gasbetriebene Fahrzeuge haben beispielsweise einen Gasmotor oder eine Brennstoffzelle mit Elektromotor als Antrieb. Um ausreichend Treibstoff speichern zu können, wird das Gas, das unter anderem Wasserstoff sein kann, unter hohem Druck im Tank gespeichert. Typisch für solche Drucktanks sind Drücke von über 200 bar, oftmals bis 600 bar und teilweise sogar bis 700 oder 875 bar. Das heißt dass der Drucktank nicht nur gasdicht unter diesem Druck sein muss, sondern auch dass er eine hohe mechanische Stabilität benötigt.

Im Stand der Technik sind Drucktanks für gasbetriebene Fahrzeuge bekannt. Diese Drucktanks weisen eine Wandung auf, die zur Abdichtung einen innenliegenden Liner, beispielsweise aus Thermoplast, und zur Schaffung der mechanischen Stabilität eine Verstärkungsschicht aus faserverstärktem Kunststoff umfasst. Bevorzugt ist die Verstärkungsschicht gewickelt und als CFK-Schicht ausgeführt. CFK steht für kohlenstofffaserverstärkter Kunststoff.

Der Boss hat eine Durchgangsbohrung und ein Anschlussgewinde. Bei zumindest einem der beiden Bosse ist eine Tankarmatur angeschlossen, die es ermöglicht, den Drucktank zu befüllen oder kontrolliert Gas zu entnehmen. Am anderen Boss ist die Durchgangsöffnung mit einem Verschluss abgedichtet oder es ist dort eine weitere Tankarmatur oder ein Sicherheitsventil vorgesehen.

Ein besonderes Augenmerk muss bei solchen Drucktanks auf die Anbindung zwischen dem metallischen Anschlussstück, dem Boss, und dem Liner gelegt werden, da hier bei der Herstellung große Kräfte auftreten und später im Betrieb hohe Anforderungen an die Dichtigkeit gestellt werden - und das auch bei mechanischer Belastung, bei wechselndem Innendruck und bei großen Temperaturschwankungen. Insbesondere bei großen Wasserstoff-Drucktanks mit einer Gesamtmasse von über 150 kg ist das eine große Herausforderung.

Für die Verbindung zwischen dem Boss und dem Liner gibt es im Stand der Technik verschiedene bekannte Lösungen. So kann beispielsweise, wie in der EP 550951 A1 dargestellt, eine formschlüssige Verbindung zwischen Liner (als innere Auskleidung bezeichnet) und dem Boss (als ringförmiger Flansch bezeichnet) verwendet werden. Solche formschlüssigen Verbindungen, wie etwa Schwalbenschwanz-Verbindungen sind derzeit allerdings nur herstellbar, wenn die Polkappen des Liners im Spritzgießverfahren oder einem ähnlichen Verfahren hergestellt werden.

Es wäre von Vorteil, wenn auch in einem anderen Verfahren als im Spritzgießverfahren formschlüssige Verbindungen hergestellt werden könnten.

Eine weitere bekannte Möglichkeit ist in der DE 102011010685 A1, in der WO 2011/103687 A1 und in der EP 2115343 A1 offenbart. Dort wird der Boss (als Grundkörper bzw. Metallkörper bezeichnet) auf den Liner-Kragen (als Innenbehälter bzw. Kernbehälter bezeichnet) aufgeschraubt. Dazu weist der Boss ein Innengewinde auf. Die Abdichtung wir mit einem, in den Boss eingeschraubten Metallzylinder, der O-Ring-Dichtungen trägt, gewährleistet. Der Liner wird somit zwischen dem Boss außen und dem Metallzylinder innen geklemmt. Der Boss wird auf der Außenseite dann mit der Verstärkungsschicht aus CFK umwickelt.

Zudem ist aus der WO 2018/217529 A1 bekannt, den Boss mit einem Außengewinde auszuführen und ihn so über ein passendes Innengewinde am Liner mit diesem zu verbinden.

Diese bekannten Ausführungen haben den Nachteil, dass sie bei der Herstellung der Verstärkungsschicht Schwierigkeiten machen, insbesondere bei größeren Drucktanks, wie sie beispielsweise für Nutzfahrzeuge, die mit Brennstoffzelle angetrieben werden sollen, nötig werden, ist der Boss nicht ausreichend fixiert. Solche neuartigen Drucktanks für Nutzfahrzeuge können Durchmesser von bis zu 600 mm und Längen von 2500 mm erreichen. Die Verstärkungsschicht wird üblicherweise im Wickelverfahren hergestellt. Dazu wird der Liner, der als Vorprodukt bereits mit dem Boss verbunden ist, in eine Wickelmaschine eingespannt und in Rotation versetzt. Das Drehmoment wird über den oder die Bosse in den Liner eingeleitet. Dabei wird der Liner mit Faserbändern oder Faser-Rovings umwickelt, wobei prozessbedingt durch die Abzugsspannung der Rovings oder Faserbänder hohe Zugkräfte tangential am Liner angreifen. Beim Umwickeln wirken somit große Drehmomentkräfte auf die Verbindung zwischen Boss und Liner. Da der Hebelarm mit dem Durchmesser des Drucktanks steigt und größere Drucktanks mit mehreren Rovings gleichzeitig umwickelt werden, ist die Belastung bei größeren Drucktanks entsprechend höher. Die bisher bekannten Ausführungen der Verbindung halten diesen gestiegenen Kräften nicht stand. Wird die Verbindung zwischen Liner und Boss beschädigt, kann das zu mechanischem Versagen oder zu Undichtigkeiten führen.

Die Aufgabe der Erfindung ist es nun, einen Drucktank beziehungsweise einen Boss für einen Drucktank zu entwickeln, der eine bessere Verbindung zwischen Liner und Boss besitzt, so dass auch neuartige, größere Drucktanks einfach und zuverlässig herzustellen sind.

Die Aufgabe wird zum einen durch einen Boss gemäß Anspruch 1 gelöst. Weitere vorteilhafte Merkmale sind in den jeweiligen abhängigen Ansprüchen genannt.

Erfindungsgemäß zeichnet sich der Boss nach Anspruch 1 dadurch aus, dass der Boss ein Außengewinde aufweist, das mit einem passenden Innengewinde des Liners verbunden werden kann, und das konzentrisch zu seiner Längsachse L angeordnet ist. Durch die Verwendung eines Außengewindes am Boss zur Verbindung kann der Durchmesser dieser Boss-Liner-Verbindung vergrößert und damit deren Belastbarkeit erhöht werden, ohne dass der Durchmesser der Durchgansbohrung des Bosses vergrößert werden muss. Durch diese Erhöhung des Gewindedurchmessers am Außengewinde kann die Verbindung höherer Drehmomente übertragen.

Weiterhin sorgt das Außengewinde am Boss und die somit gute Verbindung zwischen Boss und Liner dafür, dass der Liner an der Dichtfläche zwischen Liner und Boss kräftefrei ist. Das ist möglich, weil das Außengewinde radial weiter von der Längsachse t entfernt ist, als die Dichtfläche und somit jegliche Drehmomentbelastung von der weiter innenliegenden Dichtfläche abhält. Und zudem kann durch den vergrößerten Durchmesser an der Verbindung zwischen Boss und Liner auch die weiter innenliegende Dichtfläche zwischen Boss und Liner vergrößert und besser abdichtend ausgeführt werden.

Eine besonders gute Verbindung bei gleichzeitig platzsparender und damit gewichtssparender Ausführung ergibt sich, wenn das Außengewinde mindestens 4 bis maximal 10 Gewindegänge aufweist. Als Gewindegang wird hier eine einmal am Umfang umlaufende Rille aus Gewindeerhebung mit benachbarter Gewindevertiefung betrachtet.

In einer besonders vorteilhaften Ausführung ist das Außengewinde als zylindrisches Gewinde ausgeführt und hat einen Durchmesser bezogen auf die Spitzen der Gewindeerhebungen von mindestens 60mm, bevorzugt von mindestens 90 mm, und maximal von 180 mm. Dadurch wird eine ausreichend gute Belastbarkeit der Verbindung für den späteren Wickelvorgang gewährleistet und gleichzeitig noch ein nicht zu hohes Gewicht des Bosses ermöglicht.

Es ist von Vorteil, wenn das Außengewinde an einem Ende zumindest einen halben Gewindegang aufweist mit einer Gewindeerhebung, die niedriger ist als die anderen Gewindeerhebungen, und am anderen Ende zumindest einen halben Gewindegang, bevorzugt zumindest einen ganzen Gewindegang aufweist mit einer Gewindevertiefung, die geringer ist als die anderen Gewindevertiefungen. Insbesondere läuft die Höhe der Gewindeerhebungen linear zum einen Ende des Gewindes hin aus. Das heißt, dass die Gewindeerhebung kontinuierlich zum Ende hin reduziert wird. Und insbesondere läuft die Tiefe der Gewindevertiefungen linear zum anderen Ende des Gewindes hin aus. Das heißt, dass die Gewindevertiefung zum Ende hin kontinuierlich reduziert wird Die Gewindesteigung kann lokal an die Gewindeerhebung oder Gewindevertiefung angepasst werden.

Besonders bevorzugt befindet sich der Gewindegang mit der niedrigeren Gewindeerhebung an dem Ende, das dem Hohlraum zugewandt ist, und der Gewindegang mit der geringeren Gewindevertiefung an dem Ende, das der Verstärkungsschicht zugewandt ist. Das Innengewinde im Liner ist entsprechend gegengleich ausgeführt.

Ein solches Spezialgewinde stellt einen Formschluss zwischen Boss und Liner dar und erhöht die Stabilität der Verbindung. Wird der Boss in den Liner geschraubt, so kann durch die veränderten halben oder ganzen Gewindegänge am jeweiligen Ende des Gewindes die rotatorische Position von Boss zu Liner wiederholgenau festgelegt werden. Dadurch wird das Außengewinde am Boss im eingeschraubten Zustand exakt ausgefüllt durch das Innengewinde des Liners und so eine hoch belastbare Verbindung erzielt. Zudem bleiben selbst kleineren Fertigungsungenauigkeiten und dadurch nicht vollständig eingeschraubtem Boss keine größeren Lücken im Gewinde zwischen Boss und Liner, da die jeweiligen Gewindevertiefungen am Ende des Gewindes geringeres Volumen haben. Das ist von Vorteil, da bei größeren Lücken in der Verbindung durch den enormen Innendruck sonst hohe Scherkräfte auf den Liner wirken und diesen beschädigen können.

Eine bevorzugte Möglichkeit, um den Drucktank in einem Fahrzeug oder in einem Tankmodul gut zu befestigen, ist, den Boss so zu gestalten, dass der Boss einen Halsbereich zur Aufnahme in einer Halterung umfasst. Die Halterung umschließt den Halsbereich des Bosses und kann so das Gewicht des Drucktanks tragen. Das bietet Vorteile gegenüber der bisher üblichen Befestigung von Drucktanks mit Hilfe von Spannbändern über die Wandung des Drucktanks.

Insbesondere weist der Halsbereich eine Länge auf, die mindestens 50% des Außendurchmessers, gemessen an der dünnsten Stelle des Halsbereiches, beträgt, wobei die Länge bevorzugt zwischen 40 mm und 80 mm beträgt und wobei besonders bevorzugt der Halsbereich in dieser Länge mit einer zylindrischen Außenkontur ausgebildet ist. Dadurch ist der Halsbereich lang genug, um eine stabile Aufnahme in der Halterung zu bilden.

In einer weiteren erfindungsgemäßen Ausführung weist der Boss zudem eine ringförmige Dichtfläche auf, die senkrecht zur Längsachse (L) angeordnet ist oder die einen Winkel mit der Längsachse (L) zwischen 70° und 110° bildet. An diese Dichtfläche kann der Liner zusätzlich, zum Beispiel mit Hilfe eines Federelements, angedrückt werden, so dass die Abdichtung noch weiter verbessert wird.

Insbesondere kann der Boss ein Schraubgewinde aufweisen, das als Innengewinde ausgeführt ist, und über das eine Buchse eingeschraubt werden kann, welche dazu dient, mit Hilfe eines Federelements den Liner an eine Dichtfläche des Bosses anzudrücken.

Zum anderen wird die Aufgabe durch einen Drucktank gemäß Anspruch 8 gelöst. Weitere vorteilhafte Merkmale sind in den jeweiligen abhängigen Ansprüchen genannt.

Der erfindungsgemäße Drucktank zeichnet sich dadurch aus, dass er zwei erfindungsgemäße Bosse umfasst. Beide Bosse sind demnach über ein Außengewinde mit dem Liner, der ein passendes Innengewinde aufweist, verbunden. Hergestellt werden kann ein solcher Drucktank, indem beispielsweise zunächst ein Vorprodukt erzeugt wird. Der Liner wird aus einem Thermoplast, insbesondere aus Polyamid, zum Beispiel im Blasformverfahren hergestellt und dann werden die beiden Bosse in den Liner eingeschraubt.

In einem weiteren Verfahrensschritt wird das hergestellte Vorprodukt aus Liner und Boss mit Tapes aus faserverstärktem Kunststoff, insbesondere aus CFK (Kohlenfaserverstärkter Kunststoff), umwickelt zur Bildung der Verstärkungsschicht des Drucktanks. Die Tapes sind bevorzugt bereits mit einem passenden Kunststoffharz getränkt (sogenannte Towpreg), welches nach dem Wickeln ausgehärtet wird. Solche Towpregs führen zu noch höheren Zugkräften beim Wickeln, da sie wegen des zähen Harzes höhere Abzugskräfte für das Abwickeln von den Vorratsspulen erfordern. Durch die erfindungsgemäße Ausführung der Bosse, ist die Verbindung mit dem Liner deutlich belastbarer als bei Verbindungen nach dem Stand der Technik, so dass in jedem Fall eine störungsfreie Umwicklung ohne Beschädigung der Verbindungsstellen gewährleistet ist.

Weiterhin ist es vorteilhaft, wenn an dem einen Boss das Außengewinde als Rechtsgewinde und an dem anderen Boss das Außengewinde als Linksgewinde ausgeführt ist, wobei der Liner an jeder der Seiten ein entsprechend passendes Innengewinde aufweist. Dadurch können beide Boss-Liner-Verbindungen in eine gemeinsame Drehrichtung höhere Rotationskräfte aufnehmen und sind so besser gegen Entschrauben während des Wickelvorgangs geschützt. So kann bei dieser Ausführung der Antrieb beim Wickelvorgang über beide Bosse erfolgen.

Alternativ können die beiden Bosse auch mit einem gleichsinnigen Außengewinde (beide mit Rechtsgewinde oder beide mit Linksgewinde) ausgeführt sein. Dadurch können am Vorprodukt und am Drucktank Drehmomentkräfte in beide Rotationsrichtungen aufgenommen werden, indem jeweils einer der Bosse das Drehmoment aufnimmt.

Bevorzugt werden die zum Außengewinde passenden Innengewinde des Liners spanend im Liner hergestellt. Dadurch kann ein exakt passendes Innengewinde erzeugt werden, was die Dichtigkeit und die Belastbarkeit der Verbindung erhöht. Außerdem wird die Gefahr von Rissbildung beim Einschrauben der Bosse reduziert, da sich das Außengewinde nicht in die Oberfläche des Liners einschneiden muss.

Die Abdichtung zwischen Liner und Boss kann verbessert werden, wenn zur Abdichtung eine mit dem Boss verbundene Buchse, ein Druckring und ein Federelement vorhanden sind, derart gestaltet, dass das Federelement sich an der Buchse abstützt und den Druckring an den Liner und diesen dadurch an eine Dichtfläche des Bosses drückt.

In einer bevorzugten Variante ist die Buchse über ein Schraubgewinde am Boss befestigt, insbesondere derart, dass die Kraft, mit der der Druckring angedrückt wird, darüber verändert werden kann. So kann beispielsweise die Buchse ein Außengewinde aufweisen, das in ein Innengewinde am Boss eingreift. Durch die unterschiedlich tiefe Einschraubung der Buchse in den Boss kann die Feder zwischen Buchse und Druckring unterschiedlich stark komprimiert werden. So kann die Vorspannung gezielt eingestellt werden.

Alternativ kann die Buchse über eine Klemmung am Boss befestigt sein. Die Klemmung muss dabei so ausgeführt sein, dass sie nicht durch die Federkraft gelöst werden kann.

Die mit dem Boss verbindbare Buchse, der Druckring und das Federelement können bei der Herstellung des Liners im Blasformverfahren an dem sogenannten Blasdorn angeordnet sein. Beim Blasformverfahren wird der Kunststoff für den Liner aus einer Düse extrudiert, so dass zunächst ein Schlauch entsteht. Dann werden zwei oder mehr Teile des Blasformwerkzeuges zusammengebracht, so dass sich eine Kavität in Form des zu bildenden Liners für den Drucktank bildet. In dieser Kavität befindet sich der extrudierte Schlauch. Über den sogenannten Blasdorn, ein Mundstück, wird Gas in den Schlauch eingeblasen, wodurch sich dieser an die Innenseite des Blasformwerkzeuges anlegt. So bekommt der Liner die gewünschte Form. Nach der Verfestigung des Kunststoffmaterials kann der Liner entformt werden. Der Blasdorn wird entfernt. Bevorzugt wird der Liner aus einem thermoplastischen Kunststoffmaterials zum Beispiel aus Polyamid hergestellt. Thermoplastischer Kunststoff verfestigt nach Erkalten. Dadurch ist es möglich, dass sich der Druckring und das Federelement nach der Herstellung des Liners auf der Innenseite des Liners befinden, wobei das Federelement sich an der Buchse abstützen und den Druckring an den Liner und diesen an eine Fläche eines Bosses drücken kann, wenn die Buchse später mit dem Boss verbunden wird.

Ein wesentlicher Vorteil dieser Ausführung besteht darin, dass aufgrund des Federelements und aufgrund der zweiteiligen Ausführung mit Buchse und Druckring eine Vorspannung zur Abdichtung auf die Dichtfläche zwischen Liner und Boss aufgebracht werden kann. Die Dichtfläche befindet sich in dem Bereich, in dem der Liner an den Boss angedrückt wird. Aufgrund der so erzeugten Vorspannung ist beispielsweise auch bei geringem Innendruck oder bei Ausdehnungen durch Temperaturunterschiede immer eine ausreichende Dichtigkeit gegeben. Durch eine abgestimmte Einstellung der Federkraft kann zudem eine Überpressung des Liners und damit eine Verformung, die zu Undichtigkeit führt, vermieden werden.

Unter Federelement wird hier ein Element verstanden, dass bei Komprimierung eine ausreichende elastische Federkraft aufbringen kann. Beispielsweise kann es als ringförmiges Element aus Federstahl ausgeführt sein, welches sogenannte Federflügel aufweist, insbesondere kann das Federelement einen U-förmigen oder V-förmigen Querschnitt haben. Alternativ kann das Federelement auch aus mehreren Blattfedern oder Spiralfedern gebildet werden, welche zwischen Buchse und Druckring angeordnet sind. Auch andere Arten und Formen von Federn können hier eingesetzt werden. Als weitere Federmaterialien können beispielsweise elastische Polymere (Elastomere oder vernetzte Thermoplaste) oder Federelemente aus Faserverbundkunststoffen eingesetzt werden.

Um die Funktion dauerhaft zu gewährleisten ist es von Vorteil, wenn der Druckring zusammen mit der Buchse das Federelement vollständig umschließt. So ist das Federelement geschützt und bleibt in der gewünschten Position. Zudem bietet diese Ausführung auch eine einfachere Montage. Diese Vorteile wirken sich unter anderem auch schon bei der Erzeugung des Liners im Blasformverfahren positiv aus. Unter vollständig umschließen fällt in diesem Sinne auch, wenn noch einzelne Öffnungen oder Spalte vorhanden sind. Es muss nicht vollständig abgekapselt sein.

Damit die Vorspannung gut aufgebaut wird und eine gute Abdichtung erzielt wird, ist der Druckring gegenüber der Buchse in Richtung der Längsachse L verschiebbar. So kann der Druckring so steif ausgeführt werden, dass eine gleichmäßige Anpressung über die Dichtfläche und damit eine zuverlässige Abdichtung erreicht wird.

Bevorzugt ist die Buchse so angeordnet, dass sie keinen flächigen Kontakt mit dem Liner hat. Die Anpressung zur Abdichtung wird nur über die Fläche des Druckrings übertragen.

Anhand von Ausführungsbeispielen werden weitere vorteilhafte Merkmale der Erfindung erläutert unter Bezugnahme auf die Zeichnungen. Die genannten Merkmale können nicht nur in der dargestellten Kombination vorteilhaft umgesetzt werden, sondern auch einzeln untereinander kombiniert werden. Die Figuren zeigen im Einzelnen:
- **Fig.1**: Schematische Darstellung eines Drucktanks
- **Fig.2**: Detailausschnitt der Anbindung zwischen Boss und Wandung

- **Fig.3**: Boss mit Außengewinde
- **Fig.4**: Schematische Darstellung eines speziellen Außengewindes eines erfindungsgemäßen Bosses

Nachfolgend werden die Figuren detaillierter beschrieben. Gleiche Bezugszahlen bezeichnen gleiche beziehungsweise analoge Bauteile oder Komponenten.

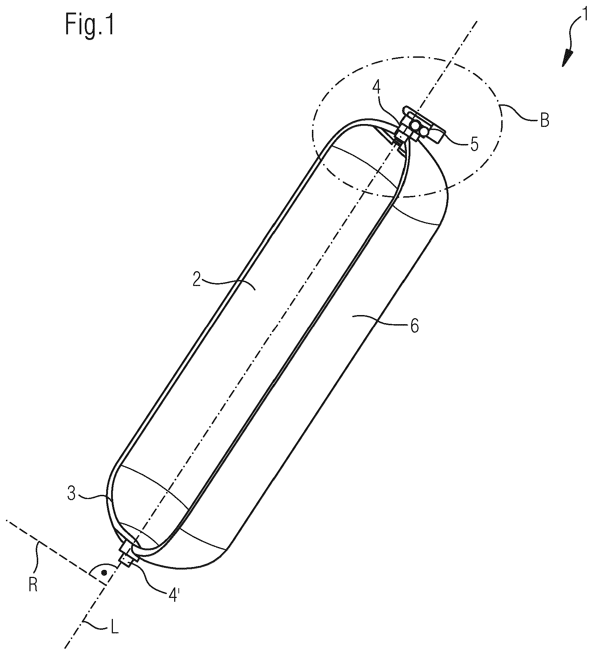

Die **Fig.1** zeigt den Drucktank 1 mit je einem Boss 4,4' an den beiden Polkappen. In den Boss 4 ist eine Tankarmatur 5 zum Füllen und zum kontrollierten Entnehmen von Gas eingeschraubt. Der Boss 4' ist mit einem Verschluss abgedichtet. Alternativ kann er ein Sicherheitsventil aufnehmen. Die Wandung des Drucktanks 1 umschließt den Hohlraum 2 und wird von einem innenliegenden Liner 3 und einer Verstärkungsschicht 6 gebildet. Der Liner 3 ist bevorzugt aus thermoplastischem Kunststoff wie beispielsweise Polyamid und wird in erfindungsgemäßen Verfahren im Blasformverfahren hergestellt. Die Verstärkungsschicht 6 wird durch ein Wickelverfahren mit Tapes aus faserverstärktem Kunststoff, bevorzugt aus CFK, hergestellt. Der Drucktank 1 ist rotationssymmetrisch um die Längsachse L. Besonderes Augenmerk muss bei solchen Drucktanks auf die Abdichtung und die Verbindung zwischen Boss 4,4' und Liner 3 gelegt werden. Insbesondere bei großen Drucktanks, wie sie bei Nutzfahrzeugen benötigt werden, um eine ausreichende Reichweite zu ermöglichen, ist die gute Verbindung zwischen Boss und Liner eine große Herausforderung. Die Bosse 4,4' sind erfindungsgemäß über ein Außengewinde mit dem Liner 3 verschraubt. Bevorzugt weist der eine Boss 4 ein Rechtsgewinde und der andere Boss 4' ein Linksgewinde auf.

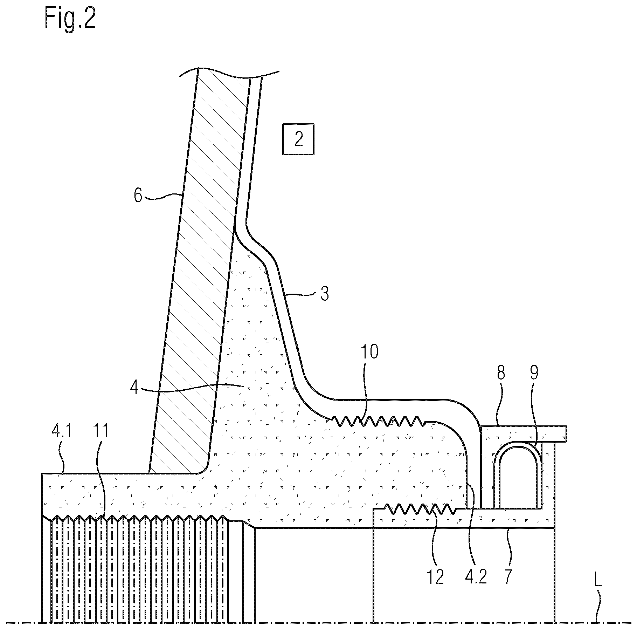

**Fig.2** zeigt den Ausschnitt B des Drucktanks 1 in Vergrößerung, so dass eine Ausführung zur verbesserten Verbindung zwischen Boss und Liner erkennbar wird. Der Boss 4 weist das Außengewinde 10 auf. Der Liner 3 hat ein entsprechend passendes Innengewinde. Bevorzugt ist dieses spanend hergestellt, nachdem der Liner 3 beispielsweise im Blasformverfahren erzeugt wurde. Aufgrund des größeren Durchmessers des Außengewindes 10 kann die Verbindung größeren Belastungen standhalten. So ist ein störungsfreies Umwickeln mit den Tapes für die Verstärkungsschicht 6 möglich.

Zusätzlich weist der Boss die Dichtfläche 4.2 auf. Der Druckring 8 und das Federelement 9 befinden sich im Inneren des Liners 3 also im Hohlraum 2. Über die Buchse 7, welche mit dem Boss 4 verbunden ist, ist das Federelement 9 vorgespannt und drückt den Druckring 8 an den Liner 3 und damit den Liner 3 an den Boss 4. Die Verbindung zwischen dem Boss 4 und der Buchse 7 ist über das Schraubgewinde 12 hergestellt, wobei sich auf der Buchse 7 ein entsprechendes Außengewinde befindet. Buchse 7 und Liner 3 berühren sich nicht flächig, nur an der Stirnfläche des Liners 3 entsteht etwas Kontakt. Die Anpressung des Liners 3 an die Dichtfläche 4.2 des Bosses erfolgt nur über den Druckring 8. Dieser Druckring 8 ist beweglich gegenüber der Buchse 7 und lässt sich in Richtung der Längsachse L verschieben. Zusammen umschließen sie das Federelement 9, was dadurch gut geschützt ist. Zudem lassen sich die Komponenten dadurch gut montieren. Dazu wird ein Spezialwerkzeug verwendet, das durch die Durchgangsbohrung des Bosses 4 eingeführt werden kann.

Die Fläche des Druckrings 8, welche an den Liner 3 gedrückt wird, und die Fläche des Liners 3, welche an den Boss 4 gedrückt wird, sind im Wesentlichen senkrecht zur Längsachse L ausgerichtet. Ebenso ist der Kragen der Buchse 7, an welchem sich das Federelement 9 abstützt, im Wesentlichen senkrecht zur Längsachse L angeordnet. So wird durch die Verschraubung 12 die Federkraft des Federelements 9 vollständig über den Druckring 8 auf die Dichtfläche zwischen dem Boss 4 und dem Liner 3 übertragen. Durch eine Schrägstellung dieser Flächen, insbesondere der Dichtfläche 4.2, von maximal +/- 20° kann immer noch eine ausreichende Kraftübertragung erreicht werden. Die Schrägstellung der Dichtfläche 4.2 trägt zudem zum besseren Entlüften des Dichtkragens während der Linerfertigung bei. Durch die Schrägstellung kann beim Zusammenfahren der Werkzeughälften die Luft besser aus der Quetschstelle entweichen.

Der Bereich des Bosses 4, in dem der Druckring 8 den Liner 3 an den Boss 4 drückt wird als Dichtfläche 4.2 oder Drosselstelle bezeichnet. Die Abdichtung und damit die Drosselung des Gasinnendrucks im Drucktank erfolgt durch die Anpressung des Liners 3 an den Boss 4 aufgrund der Federkraft des Federelements 9 und aufgrund des Gasinnendrucks selbst.

Der Druckring 8 ist auf der Seite, an der das Federelement 9 anliegt, bevorzugt so geformt, dass eine möglichst große Kontaktfläche zur Kraftübertragung genutzt wird. In diesem Fall weist der Druckring 8 eine gebogene Form auf, die dem Bogen des Federrings mit U-förmigem Querschnitt entspricht.

Für die Ausführung können auch andere Federelemente als hier im Beispiel gezeigt verwendet werden.

Des Weiteren ist am Boss 4 das Innengewinde 11 vorhanden, über das beispielsweise eine Tankarmatur, ein Sicherheitsventil oder ein Verschluss eingeschraubt werden kann. Zudem hat der Boss den Halsbereich 4.1, der dazu geeignet ist, in einer Halterung aufgenommen zu werden, um den Drucktank in einem Fahrzeug zu befestigen.

Die Lösung mit dem Außengewinde 10 auf dem Boss zur zuverlässigen und stabilen Verbindung mit dem Liner 3 kann auch in anderen als der hier dargestellten Ausführung des Bosses verwendet werden. So kann beispielsweise die Abdichtung zwischen Liner 3 und Boss 4 an der Dichtfläche 4.2 durch weitere Maßnahmen verbessert werden oder die Abdichtung kann auf andere Art und Weise erfolgen als mit dem dargestellten Druckring 8.

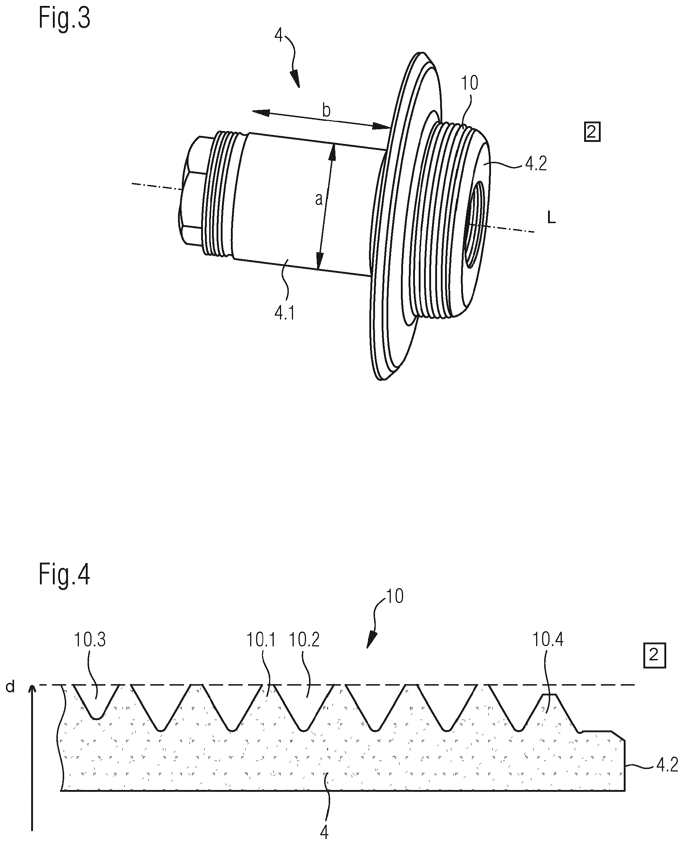

In der **Fig.3** ist eine Ausführung des Bosses 4 dargestellt. Mit dem Außengewinde 10 zur Verbindung mit einem Liner, der Dichtfläche 4.2 und dem Halsbereich 4.1. Zwischen Halsbereich 4.1 und dem Außengewinde 10 befindet sich ein Kragen, der später mit den Tapes für die Verstärkungsschicht umwickelt wird und der im fertigen Drucktank zwischen Verstärkungsschicht und Liner angeordnet ist. Bevorzugt ist das Außengewinde 10 ein zylindrisches Gewinde. Der Durchmesser des Außengewindes 10 liegt bevorzugt zwischen 60 mm und 180 mm.

Die Dichtfläche 4.2 ist dafür vorgesehen, dass der Liner durch geeignete Vorrichtungen gegen diese gedrückt wird und so eine Drosselstelle entsteht, die gegen den Innendruck abdichtet.

Zusätzlich können auf der Dichtfläche 4.2 ringförmige Erhebungen von einigen Zehntelmillimetern Höhe vorgesehen werden. Diese Erhebungen drücken sich in den anliegenden Liner und sorgen somit für eine bessere Abdichtung.

Zudem hat der Boss den Halsbereich 4.1, der dazu geeignet ist, in einer Halterung aufgenommen zu werden, um den Drucktank in einem Fahrzeug zu befestigen. Bevorzugt ist der Halsbereich mit einer zylindrischen Außenkontur aufgeführt und hat mindestens eine Länge b von mindestens 50% seines Außendurchmessers a.

Die **Fig.4** zeigt ein erfindungsgemäßes spezielles Außengewinde 10 des Bosses 4 in Schnittdarstellung. Die Gewindeerhebungen 10.1 erstrecken sich bis zum Außendurchmesser d und haben bis auf die Gewindeerhebung 10.4 die gleiche Höhe. Die Gewindevertiefungen 10.2 haben ebenfalls bis auf die Gewindevertiefung 10.3 die gleiche Tiefe. Jeweils eine einmal umlaufende Rille aus Gewindeerhebung 10.1 und Gewindevertiefung 10.2 bilden einen Gewindegang. Das hier dargestellte Außengewinde 10 hat 7 Gewindegänge.

Ein halber oder ein ganzer Gewindegang am einen Ende des Außengewindes weist eine Gewindeerhebung 10.4 mit einer geringeren Höhe auf. Insbesondere kann die Höhe der jeweiligen Gewindeerhebungen linear zu diesem Ende des Außengewindes hin abnehmen. Dieses Ende ist dem Hohlraum 2 des Drucktanks zugewandt.

Am anderen Ende des Außengewindes, das der Verstärkungsschicht beziehungsweise dem obengenannten Kragen des Bosses 4 zugewandt ist, ist ein halber oder ein ganzer Gewindegang angeordnet, der die Gewindevertiefung 10.3 mit geringerer Tiefe aufweist. Insbesondere können die Gewindevertiefungen zu diesem Ende des Außengewindes hin linear abnehmend ausgeführt sein.

Aufgrund der speziellen Ausführung des Gewindes kann ein Liner mit entsprechend passendem, gegengleichen Gewinde so aufgeschraubt werden, dass die rotatorische Positionierung exakt vorbestimmt ist, was die zuvor genannten Vorteile bietet.

### Bezugszeichenliste

- 1: Drucktank
- 2: Hohlraum
- 3: Liner
- 4, 4': Boss
- 4.1: Halsbereich
- 4.2: Dichtfläche
- 5: Tankarmatur
- 6: Verstärkungsschicht
- 7: Buchse
- 8: Druckring
- 9: Federelement
- 10: Außengewinde
- 10.1: Gewindeerhebung
- 10.2: Gewindevertiefung
- 10.3: Gewindevertiefung
- 10.4: Gewindeerhebung
- 11: Innengewinde
- 12: Schraubgewinde

- a: Außendurchmesser des Halsbereichs
- b: Länge des Halsbereichs
- d: Durchmesser des Außengewindes
- L: Längsachse des Drucktanks und des Bosses
- R: Radialrichtung des Drucktanks und des Bosses

## Patentansprüche

1. Boss (4,4') für einen Drucktank (1) zur Speicherung von Gas in einem gasbetriebenen Fahrzeug, geeignet zur Anbindung an einer Wandung des Drucktanks (1), die einen Hohlraum (2) zur Speicherung des Gases umschließt, wobei die Wandung eine Verstärkungsschicht (6) aus faserverstärktem Kunststoff und einen innenliegenden Liner (3) zur Abdichtung umfasst,
wobei der Boss (4,4') ein Außengewinde (10) aufweist, das mit einem passenden Innengewinde des Liners (3) verbunden werden kann, und das konzentrisch zu seiner Längsachse (L) angeordnet ist,
**dadurch gekennzeichnet,**
**dass** das Außengewinde (10) an einem Ende zumindest einen halben Gewindegang aufweist mit einer Gewindeerhebung (10.4), die niedriger ist als die anderen Gewindeerhebungen (10.1), und am anderen Ende zumindest einen halben Gewindegang aufweist mit einer Gewindevertiefung, die geringer ist als die anderen Gewindevertiefungen (10.2).

2. Boss (4,4') nach Anspruch 1
**dadurch gekennzeichnet,**
**dass** das Außengewinde (10) mindestens 4 bis maximal 10 Gewindegänge aufweist.

3. Boss (4,4') nach einem der Ansprüche 1 oder 2
**dadurch gekennzeichnet,**
**dass** der Boss (4,4') einen Halsbereich (4.1) zur Aufnahme in einer Halterung umfasst, wobei der Halsbereich (4.1) eine Länge (b) aufweist, die mindestens 50% des Außendurchmessers (a), gemessen an der dünnsten Stelle des Halsbereiches, beträgt, wobei die Länge (b) bevorzugt zwischen 40 mm und 80 mm beträgt und wobei besonders bevorzugt der Halsbereich (4.1) in der Länge (b) mit zylindrischer Außenkontur ausgebildet ist.

4. Boss (4,4') nach einem der vorherigen Ansprüche
**dadurch gekennzeichnet,**
**dass** das Außengewinde (10) als zylindrisches Gewinde ausgeführt ist und der Durchmesser (d) des Außengewindes bezogen auf die Spitzen der Gewindeerhebungen (10.1) mindestens 60mm, bevorzugt mindestens 90 mm, und maximal 180 mm beträgt.

5. Boss (4,4') nach einem der vorherigen Ansprüche
**dadurch gekennzeichnet,**
**dass** der Boss (4,4') eine ringförmige Dichtfläche (4.2) aufweist, die senkrecht zur Längsachse (L) angeordnet ist oder die einen Winkel mit der Längsachse (L) zwischen 70° und 110° bildet.

6. Boss (4,4') nach einem der vorherigen Ansprüche
**dadurch gekennzeichnet,**
**dass** der Boss (4,4') ein Schraubgewinde (12), ausgeführt als Innengewinde, aufweist, über das eine Buchse (7) eingeschraubt werden kann, welche dazu dient mit Hilfe eines Federelements (9) den Liner (3) an eine Dichtfläche (4.2) des Bosses (4,4') andrücken zu können.

7. Drucktank (1) für die Speicherung von Gas zur Montage in einem gasbetriebenen Fahrzeug, der eine rotationssymmetrische, langgestreckte Form hat, die im Mittelbereich zylinderförmig und an beiden Enden mit gewölbten Polkappen abgeschlossen ist, und der eine Wandung, die einen Hohlraum (2) zur Speicherung des Gases umschließt, sowie je ein metallisches Anschlussstück, einen sogenannten Boss (4,4'), an jeder der Polkappen aufweist, wobei die Wandung eine Verstärkungsschicht (6) aus faserverstärktem Kunststoff und einen innenliegenden Liner (3) zur Abdichtung umfasst,
**dadurch gekennzeichnet,**
**dass** beide Bosse (4,4') nach einem der vorherigen Ansprüche ausgeführt sind.

8. Drucktank (1) nach Anspruch 7
**dadurch gekennzeichnet,**
**dass** an dem einen Boss (4) das Außengewinde (10) als Rechtsgewinde und an dem anderen Boss (4') das Außengewinde (10) als Linksgewinde ausgeführt ist.

9. Drucktank (1) nach einem der Ansprüche 7 oder 8
**dadurch gekennzeichnet,**
**dass** die zum Außengewinde (10) passenden Innengewinde des Liners (3) spanend im Liner hergestellt sind.

10. Drucktank (1) nach einem der Ansprüche 7 bis 9
**dadurch gekennzeichnet,**
**dass** der Boss (4,4') eine Dichtfläche (4.2) aufweist, und dass zur Abdichtung eine mit dem Boss (4,4') verbundene Buchse (7), ein Druckring (8) und ein Federelement (9) vorhanden sind, derart gestaltet, dass das Federelement (9) sich an der Buchse (7) abstützt und den Druckring (8) an den Liner (3) und diesen dadurch an eine Dichtfläche (4.2) des Bosses drückt.

11. Drucktank (1) nach Anspruch 10
**dadurch gekennzeichnet,**
**dass** der Druckring (8) zusammen mit der Buchse (7) das Federelement (9) vollständig umschließt.

12. Drucktank (1) nach einem der Ansprüche 10 oder 11
**dadurch gekennzeichnet,**
**dass** der Druckring (8) gegenüber der Buchse (7) in Richtung der Längsachse L verschiebbar ist.

## Claims

1. Boss (4, 4') for a pressure tank (1) for storing gas in a gas-operated vehicle, suitable for attachment to a wall of the pressure tank (1), which wall encloses a cavity (2) for storage of the gas, wherein the wall comprises a reinforcement layer (6) composed of fibre-reinforced plastic and an inner liner (3) for sealing, wherein the boss (4, 4') has an external thread (10) which can be connected to a matching internal thread of the liner (3) and which is arranged concentrically in relation to its longitudinal axis (L),
**characterized**
**in that** the external thread (10) has at one end at least one half thread turn with a thread elevation (10.4) which is smaller than the other thread elevations (10.1), and has at the other end at least one half thread turn with a thread depression which is smaller than the other thread depressions (10.2).

2. Boss (4, 4') according to Claim 1,
**characterized**
**in that** the external thread (10) has at least 4 to at most 10 thread turns.

3. Boss (4, 4') according to either of Claims 1 and 2, **characterized**
**in that** the boss (4, 4') comprises a neck region (4.1) for being accommodated in a holder, wherein the neck region (4.1) has a length (b) which is at least 50% of the outer diameter (a) measured at the thinnest point of the neck region, wherein the length (b) is preferably between 40 mm and 80 mm, and wherein particularly preferably the neck region (4.1) is designed to be of the length (b) with a cylindrical outer contour.

4. Boss (4, 4') according to one of the preceding claims,
**characterized**
**in that** the external thread (10) is designed as a cylindrical thread, and the diameter (d) of the external thread based on the tips of the thread elevations (10.1) is at least 60 mm, preferably at least 90 mm, and at most 180 mm.

5. Boss (4, 4') according to one of the preceding claims,
**characterized**
**in that** the boss (4, 4') has an annular sealing surface (4.2) which is arranged perpendicularly to the longitudinal axis (L) or which forms an angle of between 70° and 110° with the longitudinal axis (L).

6. Boss (4, 4') according to one of the preceding claims,
**characterized**
**in that** the boss (4, 4') has a screw thread (12) which is designed as an internal thread and via which a sleeve (7) can be screwed in, said sleeve serving for allowing the liner (3) to be pushed against a sealing surface (4.2) of the boss (4, 4') with the aid of a spring element (9).

7. Pressure tank (1) for storing gas for being mounted in a gas-operated vehicle, having a circularly symmetrical elongate form which is cylindrical in the central region and is terminated at both ends by domed end caps, and having a wall which encloses a cavity (2) for storage of the gas, and also having in each case one metallic connection piece, a so-called boss (4, 4'), at each of the end caps, wherein the wall comprises a reinforcement layer (6) composed of fibre-reinforced plastic and an inner liner (3) for sealing, **characterized**
**in that** both bosses (4, 4') are designed according to one of the preceding claims.

8. Pressure tank (1) according to Claim 7, **characterized**
**in that**, at one boss (4), the external thread (10) is designed as a right-hand thread and, at the other boss (4'), the external thread (10) is designed as a left-hand thread.

9. Pressure tank (1) according to either of Claims 7 and 8,
**characterized**
**in that** the internal threads, matching the external thread (10), of the liner (3) are produced in the liner by cutting.

10. Pressure tank (1) according to one of Claims 7 to 9,
**characterized**
**in that** the boss (4, 4') has a sealing surface (4.2), and in that, for sealing, a sleeve (7) connected to the boss (4, 4'), a pressure ring (8) and a spring element (9) are provided and are configured in such a way that the spring element (9) is supported against the sleeve (7) and pushes the pressure ring (8) against the liner (3) and, in this way, the latter against a sealing surface (4.2) of the boss.

11. Pressure tank (1) according to Claim 10, **characterized**
**in that**, together with the sleeve (7), the pressure ring (8) fully encloses the spring element (9).

12. Pressure tank (1) according to either of Claims 10 and 11,
**characterized**
**in that** the pressure ring (8) is displaceable in the direction of the longitudinal axis L in relation to the sleeve (7).

## Revendications

1. Bossage (4, 4') destiné à un réservoir sous pression (1) destiné au stockage de gaz dans un véhicule fonctionnant au gaz, apte à être raccordé à une paroi du réservoir sous pression (1), laquelle entoure une cavité (2) destinée au stockage du gaz, la paroi comprenant une couche de renforcement (6) en plastique renforcé de fibres et un revêtement intérieur (3) destiné à assurer l'étanchéité,
le bossage (4, 4') comportant un filetage extérieur (10) pouvant être relié à un filetage intérieur correspondant du revêtement intérieur (3), et qui est disposé concentriquement à son axe longitudinal (L), **caractérisé**
**en ce que** le filetage extérieur (10) comporte, à une extrémité, au moins un demi-tour de filet présentant une saillie de filet (10.4) dont la hauteur est inférieure à celle des autres saillies de filet (10.1), et comporte, à l'autre extrémité, au moins un demi-tour de filet présentant un creux de filet dont la profondeur est inférieure à celle des autres creux de filet (10.2).

2. Bossage (4, 4') selon la revendication 1, caractérisé
**caractérisé en ce que** le filetage extérieur (10) comporte au moins 4 et au maximum 10 tours de filet.

3. Bossage (4, 4') selon l'une quelconque des revendications 1 ou 2,
caractérisé
**caractérisé en ce que** le bossage (4, 4') comprend une zone de col (4.1) destinée à être reçue dans un support, la zone de col (4.1) présentant une longueur (b) correspondant à au moins 50 % du diamètre extérieur (a), mesuré au niveau de la partie la plus mince de la zone de col, la longueur (b) étant de préférence comprise entre 40 mm et 80 mm et, de manière particulièrement préférée, la zone de col (4.1) étant réalisée sur la longueur (b) avec un contour extérieur cylindrique.

4. Bossage (4, 4') selon l'une quelconque des revendications précédentes,
**caractérisé**
**en ce que** le filetage extérieur (10) est réalisé sous forme de filetage cylindrique et le diamètre (d) du filetage extérieur, mesuré au niveau des sommets des saillies de filet (10.1), est d'au moins 60 mm, de préférence d'au moins 90 mm et d'au maximum 180 mm.

5. Bossage (4, 4') selon l'une quelconque des revendications précédentes,
**caractérisé**
**en ce que** le bossage (4, 4') présente une surface d'étanchéité annulaire (4.2), qui est disposée perpendiculairement à l'axe longitudinal (L) ou qui forme un angle compris entre 70° et 110° avec l'axe longitudinal (L).

6. Bossage (4, 4') selon l'une quelconque des revendications précédentes,
**caractérisé**
**en ce que** le bossage (4, 4') comporte un filetage de vissage (12), réalisé sous forme de filetage intérieur, dans lequel une douille (7) peut être vissée, ladite douille servant, à l'aide d'un élément ressort (9), à pouvoir plaquer le revêtement intérieur (3) contre une surface d'étanchéité (4.2) du bossage (4, 4').

7. Réservoir sous pression (1) destiné au stockage de gaz pour un montage dans un véhicule fonctionnant au gaz, présentant une forme allongée à symétrie de révolution, qui est cylindrique dans sa zone centrale et est fermée à ses deux extrémités par des calottes polaires bombées, et comportant une paroi qui entoure une cavité (2) destinée au stockage du gaz, ainsi qu'une pièce de raccordement métallique, appelée bossage (4, 4'), au niveau de chacune des calottes polaires, la paroi comprenant une couche de renforcement (6) en plastique renforcé de fibres et un revêtement intérieur (3) destiné à assurer l'étanchéité,
**caractérisé**
**en ce que** les deux bossages (4, 4') sont réalisés selon l'une quelconque des revendications précédentes.

8. Réservoir sous pression (1) selon la revendication 7,
**caractérisé**
**en ce qu'**au niveau de l'un des bossages (4), le filetage extérieur (10) est réalisé sous forme de filetage à droite et au niveau de l'autre bossage (4'), le filetage extérieur (10) est réalisé sous forme de filetage à gauche.

9. Réservoir sous pression (1) selon l'une quelconque des revendications 7 ou 8,
**caractérisé**
**en ce que** les filetages intérieurs du revêtement intérieur (3), correspondants au filetage extérieur (10), sont réalisés dans le revêtement intérieur par usinage par enlèvement de matière.

10. Réservoir sous pression (1) selon l'une quelconque des revendications 7 à 9,
**caractérisé**
**en ce que** le bossage (4, 4') présente une surface d'étanchéité (4.2) et en ce qu'à des fins d'étanchéité sont prévus une douille (7) reliée au bossage (4, 4'), une bague de pression (8) et un élément ressort (9), conçus de telle manière que l'élément ressort (9) prend appui sur la douille (7) et presse la bague de pression (8) contre le revêtement intérieur (3), celui-ci étant ainsi pressé contre une surface d'étanchéité (4.2) du bossage.

11. Réservoir sous pression (1) selon la revendication 10,
caractérisé
que la bague de pression (8) avec la douille (7) entoure entièrement l'élément faisant ressort (9).

12. Réservoir sous pression (1) selon l'une quelconque des revendications 10 ou 11,
**caractérisé**
**en ce que** la bague de pression (8) est déplaçable par rapport à la douille (7) dans la direction de l'axe longitudinal L.
